# EUROPÄISCHE PATENTANMELDUNG

(11) **EP 2 353 802 A2**
(43) Veröffentlichungstag der Anmeldung: **10.08.2011**
(21) Anmeldenummer: 11153865.8
(22) Anmeldetag: 09.02.2011
(51) Int. Cl.: B25J 9/16

(54) **Verfahren für eine kollisionsfreie Bahnplanung eines Industrieroboters**

(30) Priorität: 10.02.2010 DE 102010007458
(71) Anmelder: KUKA Laboratories GmbH, 86165 Augsburg (DE)
(72) Erfinder: Scheurer, Christian, 86152 Augsburg (DE); Zimmermann, Uwe, 86152 Augsburg (DE)
(74) Vertreter: Patentanwälte Funk & Böss GbR

(57) **Zusammenfassung**

Die Erfindung betrifft ein Verfahren für eine kollisionsfreie Bahnplanung eines Industrieroboters (1), der eine Steuervorrichtung (9) und einen mittels der Steuervorrichtung (9) bewegbaren Roboterarm (2) aufweist, an dem ein Objekt (11) befestigt ist, und in dessen Arbeitsraum wenigstens ein Hindernis (12) angeordnet ist.

## Beschreibung

Die Erfindung betrifft ein Verfahren für eine kollisionsfreie Bahnplanung eines Industrieroboters.

Industrieroboter sind Arbeitsmaschinen, die zur automatischen Handhabung und/ oder Bearbeitung von Objekten mit Werkzeugen ausgerüstet werden können und in mehreren Bewegungsachsen beispielsweise hinsichtlich Orientierung, Position und Arbeitsablauf programmierbar sind. Industrieroboter weisen üblicherweise einen Roboterarm mit mehreren Achsen und programmierbare Steuerungen (Steuervorrichtungen) auf, die während des Betriebs die Bewegungsabläufe des Industrieroboters steuern bzw. regeln.

Um die Bewegung durchzuführen, kann die Steuerung diese Bewegung mittels einer Bahnplanung planen.

Im Betrieb des Industrieroboters ist es gewollt, dass dieser nicht mit einem Gegenstand zusammenstößt. Wird mittels des Industrieroboters eine Last bewegt, wie dies z.B. bei Logistikapplikationen der Fall ist, dann sollte auch die bewegte Last nicht mit einem Hindernis zusammen stoßen. Die Bewegung des Industrieroboters sollte daher entsprechend geplant werden.

P. Adolphs et. al. offenbaren in "Collision-free real-time path-planning in time varying environment", "Proceedings of the 1992 IEEE/RSJ International Conference on Intelligent Robots and Systems, 7.-10. Juli 1992, Seiten 445 bis 452 ein Verfahren zum Modellieren von sich bewegenden Objekten im dreidimensionalen Konfigurationsraum eines Knickarm-Industrieroboters. Das Verfahren basiert auf einer Nachschlagetabelle, die eine Verknüpfung zwischen einem Objekt im Arbeitsraum und einer entsprechenden kollisionsfreien Region im Konfigurationsraum umfasst. Der Konfigurationsraum ist in Zylinderkoordinaten beschrieben.

Aufgabe der Erfindung ist es, ein verbessertes Verfahren für eine kollisionsfreie Bahnplanung anzugeben.

Die Aufgabe der Erfindung wird gelöst durch ein Verfahren für eine kollisionsfreie Bahnplanung eines Industrieroboters, der eine Steuervorrichtung und einen mittels der Steuervorrichtung bewegbaren Roboterarm aufweist, an dem ein Objekt befestigt ist, und in dessen Arbeitsraum wenigstens ein Hindernis angeordnet ist, aufweisend folgende Verfahrensschritte:
- Erstellen eines dreidimensionalen Modells in Zylinderkoordinaten des Arbeitsraums des Industrieroboters basierend auf einem dreidimensionalen CAD-Modell des Arbeitsraums mit modelliertem Hindernis, indem das modellierte Hindernis im dreidimensionalen Modell durch wenigstens ein hohlzylinderförmiges erstes Segment modelliert wird,
- Zerlegen des nicht durch ein erstes Segment belegten Bereichs des dreidimensionalen Modells in eine Mehrzahl von hohlzylinderförmigen und/oder zylinderförmigen zweiten Segmenten, und
- Ermitteln einer Bahn, auf der der Industrieroboter das Objekt von einem Startpunkt zu einem Endpunkt bewegen soll, derart, dass das Objekt ausschließlich innerhalb der zweiten Segmente bewegt wird.

Ein weitere Aspekt der Erfindung betrifft einen Industrieroboter, aufweisend eine Steuervorrichtung und einen mittels der Steuervorrichtung bewegbaren Roboterarm, an dem ein Objekt befestigt ist, und in dessen Arbeitsraum wenigstens ein Hindernis angeordnet ist, wobei die Steuervorrichtung eingerichtet ist, den Roboterarm derart zu bewegen, dass sich das Objekt von einem Startpunkt zu einem Endpunkt entlang einer Bahn bewegt, und die Steuervorrichtung eingerichtet ist, die Bahn gemäß dem erfindungsgemäßen Verfahren zu ermitteln.

Gemäß dem erfindungsgemäßen Verfahren wird demnach zunächst das dreidimensionale Modell erstellt, welches in Zylinderkoordinaten beschrieben ist, also auf einem Koordinatensystem basiert, das eine Winkelachse, eine Radiusachse und eine Hochwertachse umfasst bzw. dem die Koordinaten Winkel (ϕ), Radius (r) und Höhe (h) zugeordnet ist. Um eine Kollision zwischen dem Objekt, das mittels des Industrieroboters vom Startpunkt zum Endpunkt bewegt werden soll, und einem Hindernis zu vermeiden, basiert die Bewegungsplanung auf dem dreidimensionalen Modell des Arbeitsraums des Industrieroboters. Der Arbeitsraum ist dabei der Raum, den der Industrieroboter mit seinem Roboterarm anfahren kann, d.h. derjenige Raum, innerhalb dessen der Industrieroboter das Objekt bewegen kann.

Im Arbeitsraum befindet sich wenigstes ein Hindernis, mit dem das Objekt während seiner Bewegung nicht kollidieren soll. Um dies zu verhindern, wird erfindungsgemäß das Hindernis im dreidimensionalen Modell als wenigstens ein hohlzylinderförmiges Segment approximiert. Diese Approximation erfolgt aufgrund des CAD-Modells, welches insbesondere relativ genau den Arbeitsraum des Industrieroboters und somit auch das Hindernis modelliert. Insbesondere wird die Größe des ersten Segments bzw. der Mehrzahl der ersten Segmente derart gewählt, dass diese das gesamte Hindernis einschließt.

Anschließend werden die nicht durch ein Hindernis belegten Bereiche des zylindrischen Modells in eine Mehrzahl von zweiten Segmenten zerlegt. Da diese nicht von einem Hindernis belegt sind, ist es nun möglich, die Bahn, auf der der Industrieroboter das Objekt bewegen soll, innerhalb dieser zweiten Segemente zu verlegen.

Die erfindungsgemäße kollisionsfreie Bahnplanung findet demnach in einem zylindrischen Arbeitsraum insbesondere eines 6-achsigen Industrieroboters statt und ist dementsprechend relativ gut geeignet für Anwendungen in den Bereichen Logistik (Palettierung/Depalettierung), Handling sowie sonstigen Pick&Place Aufgaben.

Vorzugsweise wird der Ursprung des den Zylinderkoordinaten des Modells zugeordneten Zylinderkoordinatensystems in den Mittelpunkt des Industrieroboters gelegt.

Der Roboterarm des verwendeten Industrieroboter umfasst bevorzugt ein Gestell, ein relativ zum Gestell um eine vertikal verlaufende Achse drehbar gelagertes Karussell, eine Schwinge, einen Ausleger und eine insbesondere mehrachsige Roboterhand mit einem Flansch, an dem das Objekt zumindest indirekt, beispielsweise mittels eines am Flansch befestigten Greifers befestigt ist. Dann kann vorzugsweise die Hochwertachse des den Zylinderkoordinaten des Modells zugeordneten Zylinderkoordinatensystems in die Achse des Roboterarms gelegt werden. Die Achse, um die sich das Karussell dreht, wird normalerweise als Achse 1 bezeichnet.

Diese Variante des erfindungsgemäßen Verfahrens kann den Vorteil haben, dass Roboterbahnen mit insbesondere möglichst kurzer Taktzeit geplant werden können, da der zylindrische Suchraum (dreidimensionales Modell) auf eine Bevorzugung von Bewegungen der Achse 1 ausgelegt ist.

Außerdem kann bei diesem Ansatz auf einen so genannten Palettiermodus bei einem 6-Achsroboter verzichtet werden, da die Ausrichtung des bewegten Objekts im Voraus geplant und sogar beliebige Kippbewegungen des Objekts miteinbezogen werden können. Diese Flexibilität ermöglicht gerade beim Palettieren neue Möglichkeiten, wie z.B. vertikale Paketablage auf der Palette, die bisher noch nicht ausgeschöpft werden konnten, und ist z.B. beim automatischen Planen von Handlingsanwendungen vorteilhaft.

Um die Gefahr einer Kollision des Roboterarms mit dem Hindernis während des Bewegens des Objekts zumindest zu verringern, wenn nicht gar auszuschließen, weist nach einer bevorzugten Ausführungsform des erfindungsgemäßen Verfahrens dieses zusätzlich folgende Verfahrensschritte auf:
- Simulieren im dreidimensionalen Modell von Stellungen des Roboterarms für den zweiten Segmenten zugeordneten Positionen des Objekts,
- Ermitteln im dreidimensionalen Modell für welche der zweiten Segmente eine Kollision des Roboterarms mit dem Hindernis vorliegt, und
- Kategorisieren derjenigen zweiten Segmente als dritte Segmente, für die eine Kollision des Roboterarms mit dem Hindernis ermittelt wurde.

Es werden also diejenigen zweiten Segmente, also Segmente des dreidimensionalen Modells, die nicht mit dem Hindernis "belegt" sind, gesucht, bei deren Durchlaufen des Objekts der Roboterarm mit dem Hindernis kollidieren würde. Sind diese Segmente ermittelt, also die dritten Segmente, dann werden diese nicht für die Planung der Bahn verwendet, da die Planung der Bahn ja nur auf den zweiten Segmenten beruht.

Um zu ermitteln, ob eine der zweiten Segmente einer Kollision Roboterarm/Hindernis zugeordnet werden kann, also als ein drittes Segment kategorisiert wird, kann beispielsweise ein Sampling-basiertes Verfahren oder ein adaptives Verfahren verwendet werden.

Bei beiden Verfahrensweisen zur Kollisionsprüfung werden beispielsweise mehrere Positionen für das Objekt in einem zunächst freien Segment, d.h. zweiten Segment bestimmt und in einer z.B. auf der Steuervorrichtung des Industrieroboters laufenden Simulation angefahren.

Für die Kollisionsprüfung mittels des Sampling-basierten Verfahrens werden beispielsweise mehrere Positionen des Objekts innerhalb des relevanten zweiten Segments vorgegeben und die entsprechenden Roboterarmstellungen simuliert. Ergibt sich wenigstens für eine dieser Positionen eine Kollision des Roboterarms mit dem Hindernis, so wird dieses zweite Segment als drittes Segment kategorisiert. Andernfalls bleibt dieses zweite Segment ein zweites Segment.

Beim adaptiven Verfahren werden Distanzinformationen verwendet, um Teile eines zweiten Segments als möglichst garantiert kollisionsfrei zu markieren. Damit wird so lange fortgefahren, bis entweder das ganze fragliche zweite Segment als kollisionsfrei bewiesen oder ein Segmentstück übrig bleibt, das man nicht weiter teilen möchte (Implementierungsdetails) und daher dieses Segmentstück als kollisionsbehaftet deklariert wird.

Um die Bahn zu erhalten, kann zunächst ein Segmentpfad von der Bahn zugeordneten angrenzenden zweiten Segmente ermittelt und die Bahn basierend auf dem Segmentpfad berechnet werden.

Die Planung der Bahn basiert beispielsweise auf einer so genannten A*-Suche innerhalb des dreidimensionalen Modells, um z.B. den kürzesten bzw. kostengünstigsten Segmentpfad zwischen dem Startpunkt und dem Endpunkt zu finden. Aus diesem Segmentpfad wird gemäß dieser Variante anschließend die Bahn errechnet, z.B. mittels Punkt zu Punkt Berechnung. Diese Berechnung, die somit auf dem Modell basiert, gewährleistet eine kollisionsfreie Bewegung des Objekts entlang der Bahn. Für die Berechnung der Bahn aus dem Segmentpfad kann auch ein Überschleifen verwendet werden, um z.B. ein möglichst große Überschleifkontur zu erhalten.

Das Objekt kann mit unveränderter Orientierung entlang der Bahn bewegt werden, wobei das Modell dieser Orientierung zugeordnet ist. Je nach Orientierung des Objekts hat diese eine unterschiedliche räumliche Ausrichtung, wodurch insbesondere unterschiedliche Verteilungen dritter Segmente entstehen.

Wird das Objekt entlang der Bahn zunächst mit einer ersten Orientierung und dann mit einer von der ersten Orientierung verschiedenen zweiten Orientierung bewegt, wie dies nach einer Variante des erfindungsgemäßen Verfahrens vorgesehen ist, dann können nach einer weiteren Ausführungsform des erfindungsgemäßen Verfahrens zwei dreidimensionale Modelle erstellt werden, von denen ein erstes Modell der ersten Orientierung und ein zweites Modell der zweiten Orientierung zugeordnet ist. Somit ist es möglich, das Objekt während der Bewegung auch kollisionsfrei zu drehen.

Um auch sicher zu stellen, dass das Objekt während eines Drehens des Objekts von der ersten Orientierung in die zweite Orientierung nicht mit dem Hindernis kollidiert, kann es vorgesehen sein, das Objekt in einem Bereich des Arbeitsraums zu drehen, der einem zweiten Segment oder einer Mehrzahl von zusammenhängenden zweiten Segmenten zugeordnet ist, die groß genug ist, dass innerhalb dieses zweiten Segments oder Mehrzahl von zweiten Segmenten das Objekt von der ersten in die zweite Orientierung drehbar ist ohne das relevante zweite Segment oder Mehrzahl von zweiten Segmenten zu verlassen.

Ausführungsbeispiele der Erfindung sind exemplarisch in den beigefügten schematischen Figuren dargestellt. Es zeigen:
- Fig. 1: einen Industrieroboter mit einer Steuervorrichtung und einem Roboterarm,
- Fig. 2: einen Querschnitt eines zylinderförmigen Modells des Arbeitsraums des Industrieroboters während seines Erstellens,
- Fig. 3: ein Segment des zylinderförmigen Modells,
- Fig. 4: weitere Querschnitte des zylinderförmigen Modells in einem weiteren Erstellschritt,
- Fig. 5: eine dreidimensionale Ansicht des zylinderförmigen Modells,
- Fig. 6: eine dreidimensionale Ansicht des zylinderförmigen Modells in einem weiteren Erstellschritt,
- Figs. 7-9: ein Segment des Modells,
- Fig. 10: ein Flussdiagramm und
- Fig. 11: eine dreidimensionale Ansicht eines weiteren zylinderförmigen Modells vom Arbeitsraum des Industrieroboters,

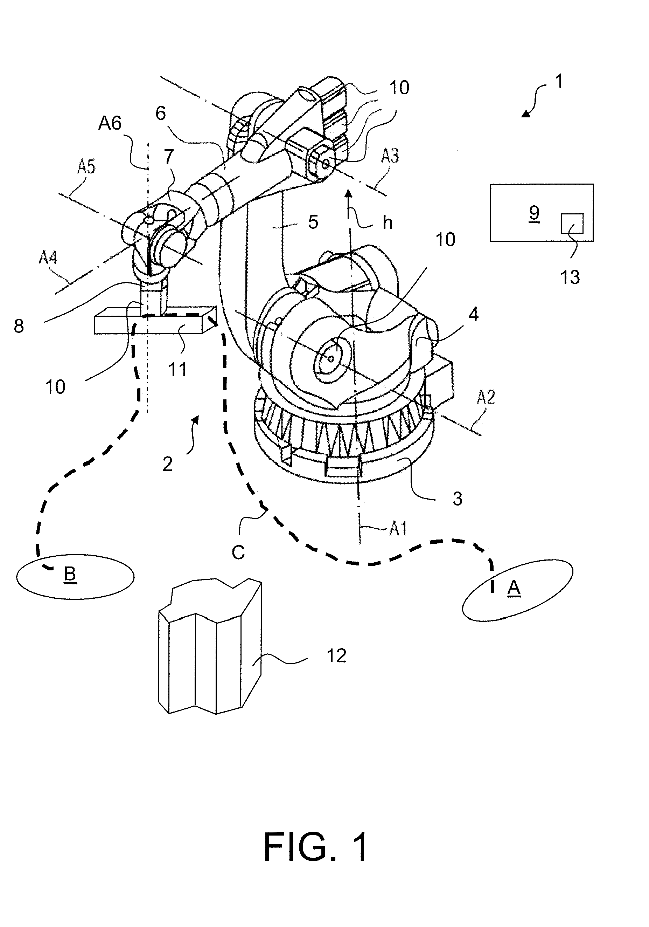

Die Fig. 1 zeigt in einer perspektivischen Darstellung einen Industrieroboter 1 mit einem Roboterarm 2.

Der Roboterarm 2 umfasst im Falle des vorliegenden Ausführungsbeispiels mehrere nacheinander angeordnete und mittels Gelenke verbundene Glieder. Bei den Gliedern handelt es sich insbesondere um ein ortsfestes oder bewegliches Gestell 3 und ein relativ zum Gestell 3 um eine vertikal verlaufende Achse A1, die auch als Achse 1 bezeichnet wird, drehbar gelagertes Karussell 4. Weitere Glieder des Roboterarms 2 sind im Falle des vorliegenden Ausführungsbeispiels eine Schwinge 5, ein Ausleger 6 und eine vorzugsweise mehrachsige Roboterhand 7 mit einem Flansch 8. Die Schwinge 5 ist am unteren Ende z.B. an einem nicht näher dargestellten Schwingenlagerkopf auf dem Karussell 4 um eine vorzugsweise horizontale Achse A2, die auch als Achse 2 bezeichnet wird, schwenkbar gelagert. Am oberen Ende der Schwinge 5 ist wiederum um eine ebenfalls vorzugsweise horizontale Achse A3 der Ausleger 6 schwenkbar gelagert. Dieser trägt endseitig die Roboterhand 7 mit ihren vorzugsweise drei Achsen A4, A5, A6.

Um den Industrieroboter 1 bzw. dessen Roboterarm 2 zu bewegen, umfasst dieser in allgemein bekannter Weise mit einer Steuervorrichtung 9 verbundene Antriebe, die insbesondere elektrische Antriebe sind. In der Figur 1 sind nur einige der elektrischen Motoren 10 dieser Antriebe gezeigt.

Im Falle des vorliegenden Ausführungsbeispiels ist am Flansch 8 des Industrieroboters 1 ein mit der Steuervorrichtung 9 in nicht dargestellter Weise verbundener Greifer 10 befestigt. Im Betrieb des Industrieroboters 1 kann demnach die Steuervorrichtung 9 bzw. ein auf dieser laufendes Rechnerprogramm die Antriebe und den Greifer 10 derart ansteuern, sodass der Flansch 8 und somit auch der Greifer 10 eine vorgegebene Bewegung durchführt und mit dem Greifer 10 ein Objekt 11 gegriffen, mittels des Industrieroboters 1 von einem ersten Ort A zu einem zweiten Ort B z.B. entlang eine Bahn C bewegt und an dem zweiten Ort B abgelegt werden kann.

Im Falle des vorliegenden Ausführungsbeispiels befindet sich im Arbeitsraum des Industrieroboters 1 wenigstens ein Hindernis 12, mit dem das Objekt 11 während seiner Bewegung mittels des Industrieroboters 1 nicht zusammen stoßen soll. Auch soll die Bewegung des Industrieroboters 1 derart ausgeführt werden, dass dessen Roboterarm 2 nicht mit dem Hindernis 12 zusammen stößt. Der Arbeitsraum des Industrieroboters 1 ist derjenige Raum, den der Industrieroboter 1 mit seinem Greifer 10 zumindest theoretisch erreichen kann.

Im Falle des vorliegenden Ausführungsbeispiels läuft auf der Steuervorrichtung 9 ein Rechnerprogramm, das die Bewegung des Industrieroboters 1 mittels einer Bahnplanung plant und anschließend durchführt.

Im Falle des vorliegenden Ausführungsbeispiels ist die Steuervorrichtung 9 eingerichtet, ein dreidimensionales Modell 13 vom Arbeitsraum des Industrieroboters 1 zu erstellen. Dieses wurde bzw. wird wie folgt erstellt:

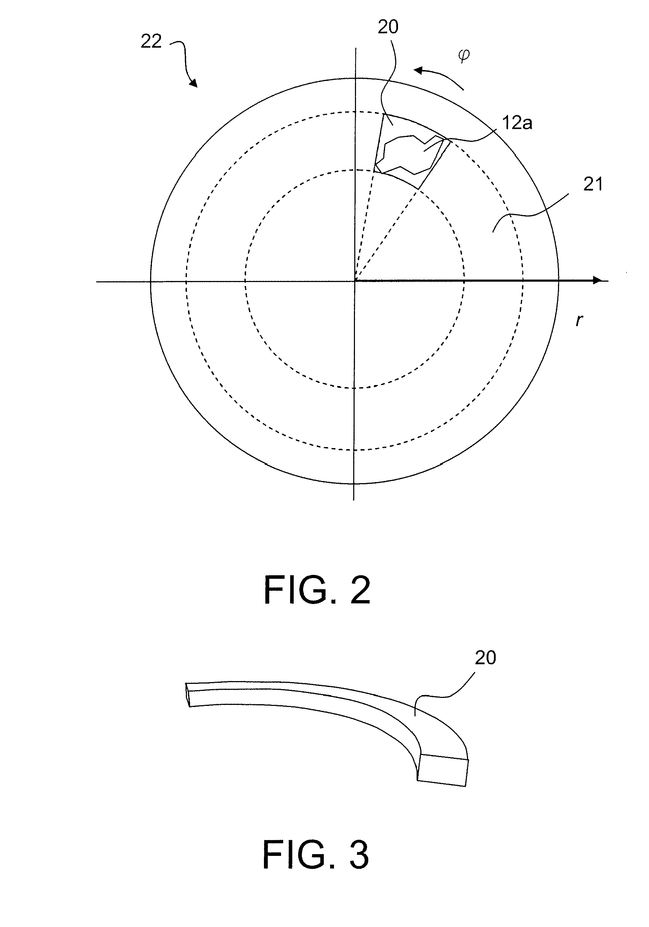

Zunächst wird im kartesischen Arbeitsraum mit den Koordinaten *x, y, z* (Basis-Koordinatensystem) des Industrieroboters 1 ein in der Fig. 2 als Querschnitt dargestellter zylindrischer Suchraum 22 mit den Dimensionen bzw. Koordinaten *ϕ* (Winkel), *r* (Radius) und *h* (Höhe) um den Mittelpunkt des Industrieroboters 1 bzw. dessen Basis-Koordinatensystems aufgebaut. Insbesondere die Koordinate h dieses Zylinder-Koordinatensystem fällt im Falle des vorliegenden Ausführungsbeispiels mit der Achse A1 zusammen, also mit derjenigen Achse, um die das Karussell 4 drehbar gelagert ist. Die Winkel- und Radiuskoordinaten *ϕ*, *r* des Zylinderkoordinatensystems bzw. des zylindrischen Suchraum 22 sind in der Fig. 2 gezeigt.

Im zylindrischen Suchraum 22 wird das Hindernis 12 und gegebenenfalls weitere Hindernisse durch hohlzylinderförmige oder Zellen, Sektoren bzw. Segmente 20, die mittels der Zylinderkoordinaten des Zylinderkoordinatensystems beschrieben werden, approximiert. Eine dreidimensionale Ansicht des das Hindernis 12 approximierenden Segments 20 ist in der Fig. 3 gezeigt.

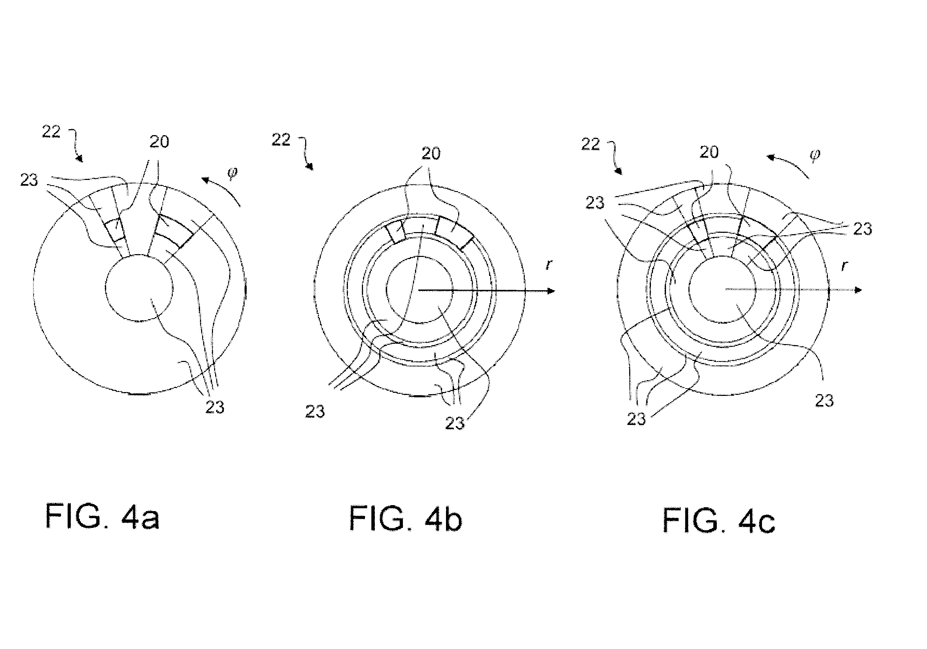

Im Falle des vorliegenden Ausführungsbeispiels ist der Industrieroboter 1 mit dem Hindernis 12 und gegebenenfalls weiteren Hindernissen oder Objekten als ein dreidimensionales CAD-Modell modelliert, d.h. die dem Industrieroboter 1 zugeordnete so genannte Roboterzelle liegt als das CAD-Modell vor. Somit ist es möglich, um das im CAD-Modell modellierte Hindernis 12 eine im Zylinderkoordinatensystem beschriebenen Suchraum 22 mit dem Segmente 20 zu modellieren, indem insbesondere das Segment 20 derart gewählt wird, sodass dieses das im CAD-Modell modellierte Hindernis 12 komplett einschließt. Es ist aber auch möglich, das Hindernis 12 durch mehrere hohlzylinderförmige oder zylinderförmige Segmente 20 zu beschreiben. Folglich erhält man im zylindrischen Suchraum 22 ein oder mehrere Segmente 20, welche mit einem Hindernis 12 belegte hohlzylinder- oder zylinderförmige Sektoren bzw. Zellen angeben. Der restliche Bereich 21 dieses Suchraums 22 ist nicht mit einem Hindernis 12 belegt und umfasst freie Zellen, Sektoren bzw. Segmente 23, die ebenfalls hohlzylinderförmig oder zylinderförmig sind. Die Figuren 4a bis 4c zeigen mögliche Zerlegungen des freien Bereichs 21 in freie Segmente 23 des zylindrischen Suchraums 22.

In den in den Figuren 4a bis 4c dargestellten Suchräumen 20 sind jeweils zwei Segmente 20 dargestellt, die jeweils mit einem Hindernis 12 belegte Bereiche des Suchraums 22 zugeordnet sind.

Der freie Bereich 21 ist in der Fig. 4a in sieben Segmente 23 zerlegt. Die Zerlegung des freien Bereichs 21 erfolgt für das in der Fig. 4a gezeigte Beispiel entlang der Winkelkoordinate *ϕ* des Zylinderkoordinatensystems.

Der freie Bereich 21 ist in der Fig. 4b in mehrere Segmente 23 zerlegt. Die Zerlegung des freien Bereichs 21 erfolgt für das in der Fig. 4b gezeigte Beispiel entlang der Radiuskoordinate r des Zylinderkoordinatensystems.

In dem in der Fig. 4c gezeigten Beispiel ist der freie Bereich 21 sowohl entlang der Winkelkoordinate *ϕ* als auch der Radiuskoordinate r des Zylinderkoordinatensystems zerlegt.

Durch Hinzunehmen der Höhenkoordinate h entstehen dreidimensionale Zellen, d.h. die Segmente 23, deren Nachbarschaftsbeziehung in einem Graph zusammengefasst werden kann. In dieser Nachbarschaftsbeziehung können auch Achsgrenzen und durch den Anwender a priori verbotene Zellen / kartesische Räume bereits berücksichtigt werden. Weitere, beliebige Informationen können darin einfließen und in der anschließenden Planung berücksichtigt werden.

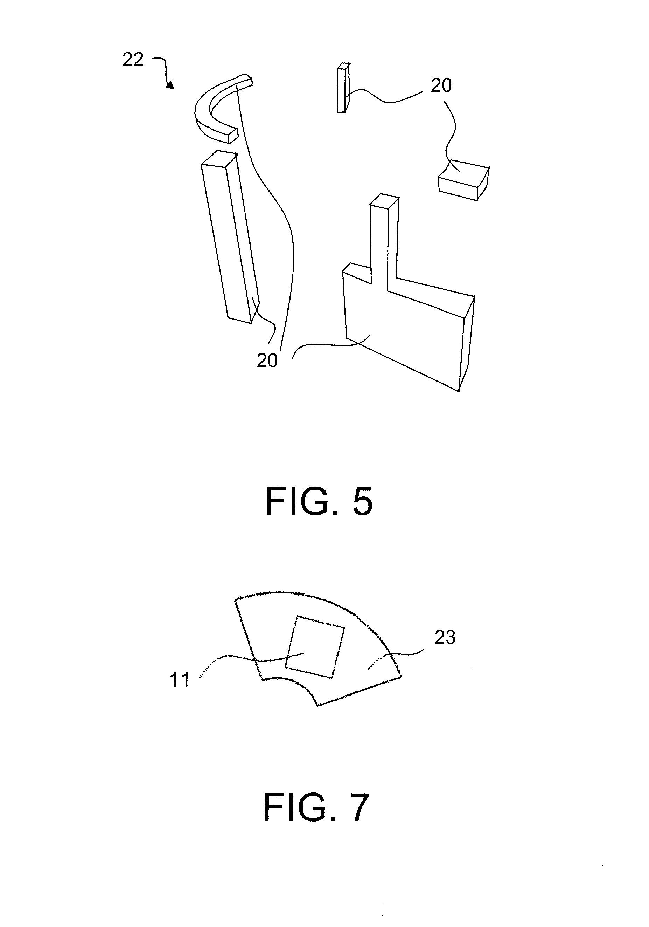

Die Fig. 5 zeigt ein Beispiel eines Suchraums 22 mit belegten Zellen bzw. Segmenten 23, die mit Hindernissen 12 belegt sind, in einer perspektivischen Darstellung.

Neben denjenigen Segmenten 20, die durch Hindernisse 12 belegt sind, können diejenigen Segmente bzw. Zellen des zylindrischen Suchraums 22 unberücksichtigt bleiben, die der Industrieroboter 1 mit am Greifer 10 gegriffenen Objekt 11 nicht erreichen kann.

Um den zylindrischen Suchraum 22 weiter zu verfeinern, wird im Falle des vorliegenden Ausführungsbeispiels folgender weitere Schritt durchgeführt:

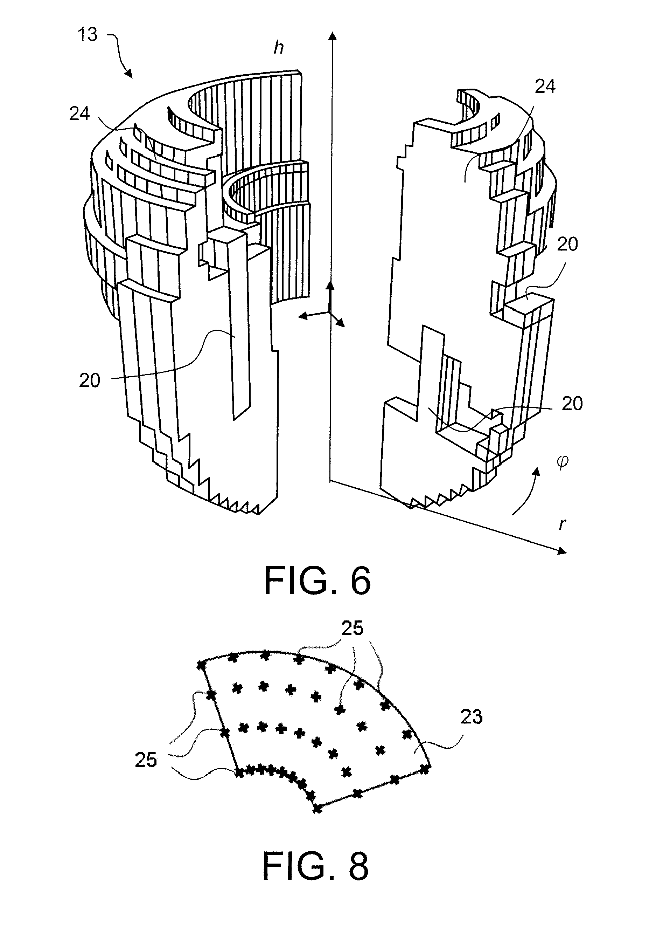

Mittels eines auf der Steuervorrichtung 9 laufenden Rechnerprogramms wird anschließend simuliert, welche der freien Segmente 23 der Industrieroboter 1 mit dem Objekt 11 durchfahren kann, ohne dass der Roboterarm 2 mit einem der Hindernisse 12 zusammen stößt. Diese Simulation basiert auf dem Suchraum 22 mit bereits belegten Segmenten 20. Aufgrund dieser Simulation ergeben sich Segmente 24, für die es eine Kollision der Hindernisse 12 mit dem Roboterarm 1 gäbe. Das entstehende Modell ist das Modell 13, das in der Figur 6 gezeigt ist.

Aufgrund des Modells 13 wird im Falle des vorliegenden Ausführungsbeispiels die Bewegung des Industrieroboters 1 mittels eines auf der Steuervorrichtung 9 laufenden Rechnerprogramms geplant. Aufgrund der Planung bewegt sich anschließend der Industrieroboter 1 derart, dass sich das Objekt 11 entlang der Bahn C vom ersten Ort A zum zweiten Ort B bewegt.

Im Falle des vorliegenden Ausführungsbeispiels erfolgt die Planung der Bahn C basierend auf einer so genannten A*-Suche innerhalb des Suchraums 22 bzw. des Modells 13, um z.B. den kürzesten bzw. kostengünstigsten Zellpfad bzw. Segmentpfad zu finden. Aus diesem Zellpfad bzw. Segmentpfad wird anschließend die Bahn C errechnet, z.B. mittels Punkt zu Punkt Berechnung. Diese Berechnung, die somit auf dem Modell 13 basiert, gewährleistet eine kollisionsfreie Bewegung des Objekts 11 entlang der Bahn C. Für die Berechnung der Bahn C aus dem Zellpfad bzw. Segmentpfad kann auch ein Überschleifen verwendet werden, um z.B. eine möglichst große Überschleifkontur zu erhalten.

Somit können im Falle des vorliegenden Ausführungsbeispiels die Zellen bzw. Segmente 22, 23, 24 in dem Suchraum 22 bzw. dem Modell 13 folgende fünf Zustände haben:

Aufgrund der Ausführung des Roboterarms 2 können Zellen bzw. Sektoren oder Segmente des Suchraums 22 nicht erreichbar sein ("OUT_OF_REACH").

Die Zelle ist mit einem Hindernis 12 belegt (Segmente 20).

Der Roboterarm 2 würde mit dem Hindernis 12 zusammen stoßen (Segmente 24).

Eine Zelle bzw. ein Segment könnte weiter unterteilt werden. Dies ist optional.

Die Zelle ist nicht belegt bzw. frei (Segment 23).

Im Falle des vorliegenden Ausführungsbeispiels wird demnach bei einer Kollisionsüberprüfung zwischen einer Kollision des Objekts 11 mit dem Hindernis 12 und einer Kollision des Roboterarms 2 mit dem Hindernis 12 unterschieden. Bei der Kollisionsüberprüfung Objekt 11/ Hindernis 12 wird insbesondere bestimmt, ob das fragliche Segment 23 das Objekt 12 ganz aufnehmen kann. Dies wird insbesondere geometrisch gelöst, wie dies z.B. die Fig. 7 veranschaulicht.

Bei der Überprüfung auf Kollisionen Roboterarm 2/ Hindernis 12 können u.A. folgende Verfahrensweisen verwendet werden: Sampling-basiertes Verfahren und adaptives Verfahren.

Bei beiden Verfahrensweisen zur Kollisionsprüfung werden beispielsweise mehrere Positionen für das Objekt 11 in einem zunächst freien Segment 23 bestimmt und in einer z.B. auf der Steuervorrichtung 9 laufenden Simulation angefahren.

Das Sampling-basierte Verfahren ist in der Fig. 8 dargestellt. Für die Kollisionsprüfung werden mehrere Positionen 25 des Objekts 11 innerhalb des relevanten Segments 23 vorgegeben und die entsprechenden Roboterarmstellungen simuliert. Ergibt sich wenigstens für eine dieser Positionen 25 eine Kollision des Roboterarms 2 mit dem Hindernis 12, so wird das entsprechende freie Segment 23 als eine Zelle bzw. als ein Segment 24 gekennzeichnet, bei deren Durchfahren mit dem Objekt 11 eine Kollision des Roboterarms 2 mit dem Hindernis 12 resultieren würde.

Für das Sampling-basierte Verfahren wird insbesondere die Roboterarmstellung derart simuliert, dass das Objekt 11 die simulierten Positionen 25 einnimmt. Beispielsweise mithilfe einer Kollisionserkennungsbibliothek kann die Kollisionsüberprüfung insbesondere als eine boolsche Kollisionsüberprüfung durchgeführt werden. Sind alle simulierten Positionen 25 kollisionsfrei, wird daraus gefolgert, dass das komplette Segment 23 kollisionsfrei ist. Dies kann allerdings nicht absolut garantiert werden, denn es könnte z.B. ein relativ kleines Hindernis 12 verfehlt worden sein.

Ein Vorteil des Sampling-basierten Verfahrens ist ihre relativ schnelle Durchführung, weil beispielsweise keine rechenintensiven Distanzberechnungen, sondern nur Kollisionsüberprüfungen in einem bestimmten Abstand (Schrittweite) durchgeführt werden müssen. Allerdings kann in diesem Fall die Kollisionsfreiheit nicht mit hundertprozentiger Wahrscheinlichkeit garantiert werden, egal wie dicht die Zelle bzw. das Segment 23 abgetastet wird.

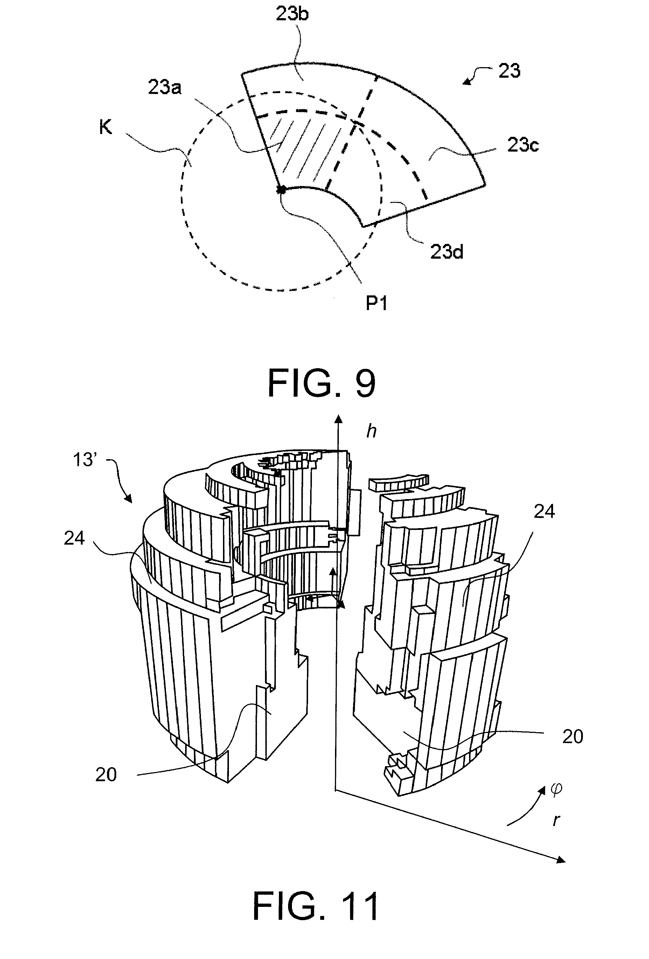

Beim adaptiven Verfahren hingegen werden Distanzinformationen verwendet, um Teile eines Segments 23 als garantiert kollisionsfrei zu markieren. Damit wird solange fortgefahren, bis entweder das ganze Segment 23 als kollisionsfrei bewiesen oder ein Segmentstück übrig bleibt, das man nicht weiter teilen möchte (Implementierungsdetails) und daher dieses Segmentstück als kollisionsbehaftet deklariert wird. Dies ist in der Fig. 9 veranschaulicht.

Für das adaptive Verfahren wird zunächst die Roboterarmstellung derart simuliert, dass das Objekt 11 sich am Punkt P1 befindet. Anschließend wird die minimale Distanz zwischen der Robotergeometrie und dem oder den Hindernissen 12 im Suchraum 22 bestimmt. Das Objekt 11 ist insbesondere Teil der simulierten Robotergeometrie. Es kann z.B. eine Kollisions-/ Distanzberechnungsbibliothek verwendet werden. Jeder Punkt auf der Robotergeometrie darf sich nun maximal um diese minimale Distanz bewegen, was in der Fig. 9 schematisch als ein Kreis bzw. Kugel K für eine dreidimensionale Anwendung dargestellt ist. Die eingeschlossene Fläche 23a des Segments 23 ist kollisionsfrei. Eine weitere Unterteilung des Segments 23 bringt die Untersegmente 23b, 23c und 23d hervor, die nun auf die gleiche Weise weiter untersucht werden (iteratives Verfahren mit Abbruchbedingung).

Nachdem die komplette Zellstruktur bzw. Segmentstruktur aufgebaut ist, d.h. das Modell 13 in Zylinderkoordinaten gemäß Fig. 6 vorliegt und gegebenenfalls Nachbarschaftsbeziehungen in einen Zellgraphen/Segmentgraphen eingeflossen sind, lassen sich darauf Graphenalgorithmen anwenden, z.B. den A*-Algorithmus zur Ermittlung eines insbesondere kostenoptimalen Pfades durch den Graph, dessen Kanten Kosten zugewiesen worden sind. Für die Kosten entlang der Kanten lassen sich beispielsweise beliebige heuristische Funktionen definieren, u.A. kann die kartesische Entfernung als Kostenfunktion und die Manhattan-Distanz für die Anzahl von Punkt-zu-Punkt Bewegungen entlang der Zylinderdimensionen (*r*, *h*, *ϕ*) implementiert sein.

Das Ergebnis dieser A* Suche ist eine Sequenz von freien Segmenten 23 durch die Segmentstruktur, durch die der Industrieroboter 1 das Objekt 11 bewegen kann. Diese Sequenz wird als Zellenpfad bzw. Segmentpfand bezeichnet und dient zum Erhalt der Bahn C.

Aus dem gefundenen Zellpfad bzw. Segmentpfad wird im Falle des vorliegenden Ausführungsbeispiels in einem weiteren Berechnungsschritt ein Punkt-zu-Punkt Pfad für den Industrieroboter 1 zusammengesetzt. Der Punkt-zu-Punkt Pfad ist die Bahn C, auf der sich das Objekt 11 bewegen soll. Dabei wird im Falle des vorliegenden Ausführungsbeispiels sicher gestellt, dass das Objekt 11 während seiner Bewegung entlang der Bahn C keine freien Segmente 23 verlässt, um eine Kollision mit einem Hindernis 12 zu verhindern.

Es kann auch noch für die Berechnung der Bahn C vorgesehen sein, den Punkt-zu-Punkt Pfad in einem Nachbereitungsschritt zu glätten, indem z.B. unnötigerweise durchfahrene Zellen bzw. Sektoren bzw. Segmente übersprungen und aus dem Pfad gestrichen werden.

Wenn beispielsweise zwei benachbarte Segmente 23 in *ϕ-*Richtung durchfahren werden, dann entspricht dies einer Punkt-zu-Punkt Bewegung um die Achse A1, beim Verfahren in rund/oder h-Richtung, entsprechend einer Punkt-zu-Punkt Bewegung mit den Achsen A2 und A3. Die Achsen A4-A6 der Roboterhand 7 werden so im Falle des vorliegenden Ausführungsbeispiels derart verfahren, dass die Vorzugsorientierung für das Objekt 11 gerade eingehalten wird, d.h. dass das Objekt 11 während der Bewegung entlang der Bahn C nur seine Position, nicht aber seine Orientierung ändert.

Wird beispielsweise als Kostenfunktion die Manhattan Distanz verwendet, so kann es sein, dass nicht genug Punkte pro Bahn C berechnet werden, sodass in diesem Fall zusätzlich mit dem Berechnen z.B. der maximalen Überschleifdistanz eine weitere Verbesserung in Bezug auf die Taktzeit möglich ist.

Es ist auch möglich, einen ermittelten Punkt-zu-Punkt Pfad für die Bahn C zu überschleifen. Dadurch ist es möglich, die Taktzeit zu erhöhen und somit die Bahn C schneller zu durchlaufen. In diesem Fall sollte aber darauf geachtet werden, dass die Bahn C kollisionsfrei bleibt, d.h. dass weder das Objekt 11 noch der Roboterarm 2 mit dem Hindernis 12 zusammen stößt.

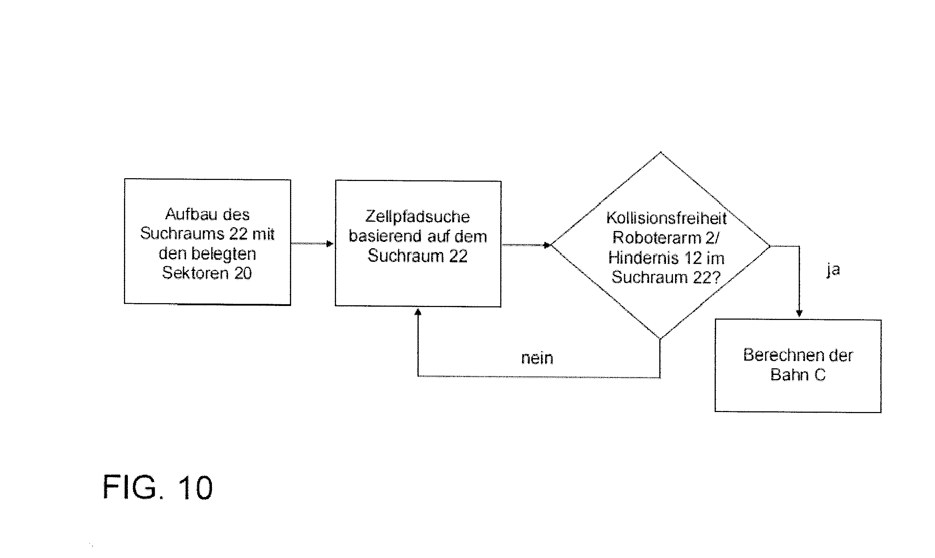

Es ist auch möglich, die Berechnung der relativ zeitintensiven Kollisionsüberprüfungen, solange zu verzögern, bis sie unbedingt nötig ist. Im vorliegenden Ausführungsbeispiel ist dies die Kollisionsüberprüfungen für den Roboterarm 2, d.h. das Ermitteln der Sektoren 24. Die Ermittlung der Segment 24, also derjenigen Segmente 24, bei deren Durchlaufen des Objekts eine Kollision des Roboterarms 2 mit dem Hindernis 12 erfolgen würde, kann demnach auch erst dann erfolgen, wenn das zu prüfende zunächst freie Segment 23 im Segmentpfad auftaucht und potenziell durchfahren werden soll. Dies ist in der Fig. 10 zusammen gefasst.

Bei dieser Variante wird demnach keine vollständige Zellenzerlegung bzw. Segmentenzerlegung des Suchraums 20 im Vorverarbeitungsschritt berechnet, sondern erst nach und nach mit den Informationen bezüglich der Kollisionsfreiheit der Segmente 23 im Segmentpfad aktualisiert.

Im Falle des vorliegenden Ausführungsbeispiels bleibt die Orientierung des Objekts 11 während seiner Bewegung entlang der Bahn C konstant. Außerdem werden die belegten Segmente 20, 24 aufgrund der aktuellen Orientierung des Objekts 11 ermittelt.

In einer Ausführungsform kann es jedoch auch vorgesehen sein, dass der Industrieroboter 1 während der Bewegung des Objekts entlang der Bahn C die Orientierung des Objekts 11 ändert. In diesem Fall werden für beide Orientierungen, oder wenn mehr als zwei Orientierungen vorgesehen sind, für jede der Orientierung des Objekts 11 ein der jeweiligen Orientierung zugeordneter Suchraum 20 und anschließend die entsprechenden Segmente 24, die einer Kollision Roboterarm 2/Hindernis 12 zugeordnet sind, ermittelt.

Im Falle des in der Fig. 1 gezeigten Ausführungsbeispiels ist das Objekt 11 derart ausgerichtet, dass es horizontal eine größere Ausdehnung aufweist als vertikal. Das dieser Orientierung des Objekts 11 zugeordnete Modell 13 ist in der Fig. 6 gezeigt.

Wird nun z.B. das Objekt 11 während seiner Bewegung entlang der Bahn C beispielsweise um 90° gedreht, kann z.B. die Steuervorrichtung 9 ein weiters Modell 13' ermitteln, welches entsprechend dem Modell 13 errechnet wird, jedoch die geänderte Orientierung des Objekts 11 berücksichtigt. Dann ergibt sich eine andere Segmentaufteilung des Suchraums 22 und entsprechend des Modells 13', wie dies in der Fig. 11 gezeigt ist.

Eine Umorientierung von der einen Orientierung des Objekts 11 in die andere kann dann in ausreichend großen und freien Segmenten 23 durchgeführt werden. Dazu werden beispielsweise diese Segmente 23 in den beiden Segmentzerlegungen durch Kanten in dem Suchgraphen miteinander verbunden.

Auch eine stufenweise Umorientierung mit Hilfe von Zwischenstellungen ist denkbar, z.B. falls eine direkte Umorientierung des Objekts 11 von der Anfangspose am ersten Ort A in die Endpose am zweiten Ort B nicht möglich ist. Dazu werden gegebenenfalls mehrere Zellstrukturen, nämlich für jede Stufe pro Objektkoordinatenachse genau eine Zerlegung, berechnet. Durch Symmetrieeigenschaften des Objekts 11 lassen sich eventuell Zerlegungen einsparen.

Insbesondere ist es vorgesehen, das Objekt 11 während der Bewegung entlang der Bahn C in einem freien Segment 23 umzuorientieren, welches eine Kugel aufnehmen kann, deren Abmessung, d.h. Radius derart groß gewählt ist, dass sie das Objekt 11 komplett umhüllt. Dann ist es möglich, dass in diesem Segment jede beliebige Umorientierung des Objekts 11 durchgeführt und damit während der Planung in jede Zerlegung gesprungen werden kann.

## Patentansprüche

1. Verfahren für eine kollisionsfreie Bahnplanung eines Industrieroboters (1), der eine Steuervorrichtung (9) und einen mittels der Steuervorrichtung (9) bewegbaren Roboterarm (2) aufweist, an dem ein Objekt (11) befestigt ist, und in dessen Arbeitsraum wenigstens ein Hindernis (12) angeordnet ist, aufweisend folgende Verfahrensschritte:
- Erstellen eines dreidimensionalen Modells (13, 13') in Zylinderkoordinaten (r, h, ϕ) des Arbeitsraums des Industrieroboters (1) basierend auf einem dreidimensionalen CAD-Modell des Arbeitsraums mit modelliertem Hindernis (12a), indem das modellierte Hindernis (12a) im dreidimensionalen Modell (13, 13') durch wenigstens ein hohlzylinderförmiges erstes Segment (20) modelliert wird,
- Zerlegen des nicht durch ein erstes Segment (20) belegten Bereichs (21) des dreidimensionalen Modells (13, 13') in eine Mehrzahl von hohlzylinderförmigen und/oder zylinderförmigen zweite Segmente (23), und
- Ermitteln einer Bahn (C), auf der der Industrieroboter (1) das Objekt (11) von einem Startpunkt (A) zu einem Endpunkt (B) bewegen soll, derart, dass das Objekt (11) ausschließlich innerhalb der zweiten Segmente (23) bewegt wird.

2. Verfahren nach Anspruch 1, aufweisend Legen des Ursprungs des den Zylinderkoordinaten (r, h, ϕ) des Modells (13, 13') zugeordneten Zylinderkoordinatensystems in den Mittelpunkt des Industrieroboters (1).

3. Verfahren nach Anspruch 1 oder 2, bei dem der Roboterarm (2) ein Gestell (3), ein relativ zum Gestell (3) um eine vertikal verlaufende Achse (A1) drehbar gelagertes Karussell (4), eine Schwinge (5), einen Ausleger (6) und eine insbesondere mehrachsige Roboterhand (7) mit einem Flansch (8) aufweist, an dem das Objekt (11) zumindest indirekt befestigt ist, aufweisend den Verfahrensschritt des Legens der Hochwertachse des den Zylinderkoordinaten (r, h, ϕ) des Modells (13, 13') zugeordneten Zylinderkoordinatensystems in die Achse (A1) des Roboterarms (2).

4. Verfahren nach einem der Ansprüche 1 bis 3, zusätzlich aufweisend folgende Verfahrensschritte:
- Simulieren im dreidimensionalen Modell (13, 13') von Stellungen des Roboterarms (2) für die zweiten Segmente (23) zugeordneten Positionen des Objekts (11),
- Ermitteln im dreidimensionalen Modell (13, 13') für welche der zweiten Segmente (23) eine Kollision des Roboterarms (2) mit dem Hindernis (12) vorliegt, und
- Kategorisieren derjenigen zweiten Segmente (23) als dritte Segmente (24), für die eine Kollision des Roboterarms (2) mit dem Hindernis (12) ermittelt wurde.

5. Verfahren nach einem der Ansprüche 1 bis 4, aufweisend Ermitteln eines Segmentpfades von der Bahn (C) zugeordneten angrenzenden zweiten Segmente (23) und Berechnen der Bahn (C) basierend auf dem Segmentpfad.

6. Verfahren nach einem der Ansprüche 1 bis 5, bei dem das Objekt (11) mit unveränderter Orientierung entlang der Bahn (C) bewegt wird und das Modell (13) dieser Orientierung zugeordnet ist.

7. Verfahren nach einem der Ansprüche 1 bis 5, bei dem das Objekt (11) entlang der Bahn (C) zunächst mit einer ersten Orientierung und dann mit einer von der ersten Orientierung verschiedenen zweiten Orientierung bewegt wird.

8. Verfahren nach Anspruch 7, aufweisend Erstellen zweier dreidimensionaler Modelle (13, 13'), von denen ein erstes Modell (13) der ersten Orientierung und ein zweites Modell (13') der zweiten Orientierung zugeordnet ist.

9. Verfahren nach Anspruch 8, aufweisend Drehen des Objekts (11) von der ersten Orientierung in die zweite Orientierung in einem Bereich des Arbeitsraums, der einem zweiten Segment (23) oder einer Mehrzahl von zusammenhängenden zweiten Segmente (23) zugeordnet ist, die groß genug ist, dass innerhalb dieser zweiten Segmente (23) oder Mehrzahl von zweiten Segmenten (23) das Objekt (11) von der ersten in die zweite Orientierung drehbar ist ohne das relevante zweite Segment (23) oder Mehrzahl von zweiten Segmenten (23) zu verlassen.

10. Industrieroboter, aufweisend eine Steuervorrichtung (9) und einen mittels der Steuervorrichtung (9) bewegbaren Roboterarm (2), an dem ein Objekt (11) befestigt ist, und in dessen Arbeitsraum wenigstens ein Hindernis (12) angeordnet ist, wobei die Steuervorrichtung (9) eingerichtet ist, den Roboterarm (2) derart zu bewegen, dass sich das Objekt (11) von einem Startpunkt (A) zu einem Endpunkt (B) entlang einer Bahn (C) bewegt, und die Steuervorrichtung (9) eingerichtet ist, die Bahn (C) gemäß dem Verfahren nach einem der Ansprüche 1 bis 9 zu ermitteln.
